# EUROPÄISCHE PATENTSCHRIFT

(11) **EP 3 115 171 B1**
(45) Veröffentlichungstag und Bekanntmachung des Hinweises auf die Patenterteilung: **09.09.2020**
(21) Anmeldenummer: 16175201.9
(22) Anmeldetag: 20.06.2016
(51) Int. Cl.: B29C 44/34, B29C 33/00, F16J 15/46, B29C 44/12, B29K 75/00, B29L 31/30

(54) **SCHÄUMWERKZEUG MIT FAHRBAREM DICHTUNGSENDSTÜCK**
FOAMING MOULD WITH EXTENDABLE SEALING END PIECE
MOULE A MOUSSE COMPRENANT UN ELEMENT D'EXTREMITE D'ETANCHEITE DEPLAÇABLE

(30) Priorität: 09.07.2015 DE 102015111078
(43) Veröffentlichungstag der Anmeldung: 11.01.2017
(73) Patentinhaber: KraussMaffei Technologies GmbH, 80997 München (DE)
(72) Erfinder: Hedemann, Bernd, 49594 Alfhausen (DE); Schröder, Verena, 49124 Georgsmarienhütte (DE)
(74) Vertreter: Wilhelm, Ludwig

(56) Entgegenhaltungen:
- EP-A2- 1 361 380
- DE-A1-102006 015 184
- DE-A1-102012 203 012
- DE-C1- 19 916 789
- DE-U1- 20 110 950
- GB-A- 2 033 037
- JP-A- 2007 100 790
- US-B1- 6 254 106

## Beschreibung

Die Erfindung betrifft ein Schäumwerkzeug, insbesondere zum Schäumen von bspw. PU-Schaum, also Polyurethan-Schaum, mit einem ersten Werkzeugteilstück, wie einem Werkzeugoberteil, an dem ein Kunststoffträger / Spritzgusskunststoffbauteil / Kunststoffträgerbauteil angebracht / anbringbar / festgelegt / festlegbar ist und einem davon beabstandbaren zweiten Werkzeugteilstück, wie einem Werkzeugunterteil, das mit einer Kunststoffhaut in Verbindung gebracht / bringbar ist, bspw. verbunden ist, mit einem Dichtungsschlauch, der mit dem zweiten Werkzeugteilstück in dichtendem Kontakt steht und an wenigstens einem Abschnitt / Ende mit einem Verschlussstück (luft- )dicht verschlossen ist, wobei der Dichtungsschlauch in eine solche Position auf das erste Werkzeugteilstück zu verfahrbar ist, dass die Kunststoffhaut mit dem Kunststoffträger in dichtenden Kontakt bringbar ist. Unter einem Ende wird hierbei auch Zwischenbereich subsumiert.

Solche Schäumwerkzeuge sind bereits im Einsatz, um zwischen einer Kunststoffhaut, die bspw. als Kunstlederhaut ausgebildet sein kann, und einem Kunststoffträger, einen dazwischen befindlichen Zwischenraum mit PU-Schaum aufzufüllen. Der PU-Schaum treibt dann aus, und bildet eine mit Handkraft einfach deformierbare Schicht, so dass für den Automobilbau bspw. einsetzbare Innenverkleidungs-Kunststoffbauteile in optisch und haptisch ansprechender Ausführung erstellbar sind.

Die DE 10 2006 015 184 A1 zeigt bspw. eine aufblasbare Dichtungsvorrichtung mit einem in einer Buchse geführten und über eine Luftzufuhr unter Anlegen von Luftdruck ausfahrbaren Stempel. Der Stempel ist mit einem Dichtschlauch verbunden, wobei der Dichtschlauch in dem Stempel eingesetzt ist und der Innenraum des Dichtschlauchs mit einer Luftzufuhr so verbunden ist, dass sich der Dichtschlauch bei Anlegen eines Luftdrucks ausdehnt.

Eine andere Möglichkeit einer solchen Dichtvorrichtung offenbart bspw. die DE 199 16 789 C1. Diese Dichtvorrichtung dient zur Abdichtung von zumindest zwei einander zugewandten Oberflächen, die bspw. die Werkzeugteiloberflächen eines Schäumwerkzeugs, mit einem aufblähbaren Dichtschlauch, der in einer in der ersten Oberfläche des ersten Werkzeugteilstücks angeordneten und in Richtung der zweiten Oberfläche des zweiten Werkzeugteilstücks offenen Nut angeordnet ist. Der Druckschlauch ist mit einem druckbeaufschlagbaren Medium befüllbar und durch das Medium aufblähbar sowie an die zweite Oberfläche des zweiten Werkzeugteilstücks dichtend anlegbar. Die stirnseitigen Enden des Dichtschlauchs sind hierbei jeweils in einem Einsatzstück, wie bspw. eine Hülse angeordnet, welche die stirnseitigen Enden des Dichtschlauchs unter elastischer Vorspannung dichtend umschließen. Die Hülsen sind jeweils in einer Ausnehmung des ersten Werkzeugteilstücks angeordnet und erstrecken sich im Wesentlichen quer zur Längsrichtung der Nut.

Die EP 1 361 380 A2 offenbart eine Dichteinrichtung für einen Spalt zwischen zwei benachbarten Maschinenteilen, welche zumindest einen aufblasbaren, elastisch dehnbaren Schlauch umfasst, der in einer Nut in der Seitenwand eines der Maschinenteile eingefügt ist und der aufgeblasen an eine den Spalt auf der der Nut gegenüberliegenden Seite begrenzende Fläche des anderen Maschinenteils anlegbar ist, wobei wenigstens ein Ende des Schlauches mit einer umlaufenden und in seinen Innenraum eingreifenden Einstülpung versehen ist, in die innenseitig ein Stützkörper eingefügt ist.

Bei anderen bekannten Schäumwerkzeugen wurde üblicherweise am Rand des zu erstellenden Bauteils, bspw. eines Armaturenbrettteils, ein Schlauch eingesetzt, der mit Druckluft versorgbar ist, um eine Dichtwirkung zwischen der Kunststoffhaut und dem Kunststoffträger zu erreichen. Allerdings musste der Schlauch herkömmlicherweise auch an wenigstem einen Ende verschlossen werden, für welches Verschlussstücke eingesetzt sind. Diese Verschlussstücke verhindern aber in jenem Bereich ein Ausdehnen des Dichtungsschlauches, was in einer mangelnden Dichtwirkung zwischen der Kunststoffhaut und dem Kunststoffträger in jenem Bereich resultiert. Dies ist aber ungewünscht, da dann der in dem Zwischenraum zwischen der Kunststoffhaut und dem Kunststoffträger eingebrachte PU-Schaum austreten kann. Dies führt zu nicht akzeptablen Arbeitsergebnissen.

Um dies zu vermeiden, wurde üblicherweise ein umlaufendes Abdichten eines zu schäumenden Sandwiches über eine aufblasbare Dichtung etwa in mehreren Dichtkreisen mit extra angefertigten, individuell ausgeformten verfahrbaren Endstücken vorgesehen. Dabei wird ein solch individuelles Endstück, bspw. aus einer Messinglegierung zwischen die Kunststoffhaut und den Kunststoffträger eingesetzt und in einem speziellen Arbeitsschritt, bspw. während oder nach dem Aufblasen des Dichtungsschlauches, verfahren. Sowohl die Apparatur zum Verfahren der individuellen Endstücke, als auch die Anfertigung, als auch die Lagerung, als auch die Nutzung gestaltet sich in puncto Kosten, Handling und Übertragbarkeit auf unterschiedliche Anwendungsbereiche problematisch.

Auch die Verwendung von bekannten starren Gummistücken zwischen dem Kunststoffträger und der Kunststoffhaut, führt nicht zu dem gewünschten Ergebnis, da keine ausreichend hohe Qualität gewährleistet ist.

Auch die Lösung, am Kunststoffträger spezielle Aufdickungen vorzusehen, wie bspw. in der DE 201 10 950 U1 offenbart, um eine Dichtung im Endbereich des Dichtungsschlauches zu erreichen, ist keine kostengünstige Lösung, und insbesondere auch keine Lösung, die von einem Anwendungsfall auf den nächsten übertragbar ist. So muss für jedes gefertigtes Innenverkleidungsbauteil eines Kraftfahrzeuges ein spezielles Kunststoffträgerbauteil eingesetzt werden. Dies treibt die Kosten jedoch unnötigerweise in die Höhe.

Auch andere bereits bekannte Lösungen, wie z.B. in der DE 10 2012 203 012 A1, der US 6 254 106 B1, der GB 2 033 037 A oder der JP 2007 1007920 A offenbart, führen zu keinen zufriedenstellenden Lösungen im Sinne der dieser Erfindung zugrunde gelegten Aufgabe.

Es soll also eine Lösung gefunden werden, um die Nachteile aus dem Stand der Technik zu beseitigen, oder wenigstens zu mildern. Insbesondere soll vermieden werden, aufgrund von Bauteilgeometrieabhängigkeiten teure Einzelanfertigungen und Ersatzteilbeschaffungen in Kauf nehmen zu müssen. Vielmehr soll eine vereinfachte Version mittels Standard- und Normteilen herstellbar sein. Es soll keine Abhängigkeit mehr von der am Ende gewünschten und dann vorliegenden Bauteilgeometrie vorhanden sein.

Diese Aufgabe wird bei einem gattungsgemäßen Schäumwerkzeug erfindungsgemäß dadurch gelöst, dass das Verschlussstück dichtend in den vorzugsweise als Silikonschlauch ausgebildeten Dichtungsschlauch eingesetzt ist und von einer Schelle umgeben ist, die translatorisch bewegbar ist..

Auf diese Weise werden also verfahrbare Dichtungsendstücke vorgehalten, welche zu einer optisch und haptisch einwandfreien Ausbildung des fertigen Bauteils führen.

Vorteilhafte Ausführungsbeispiele sind in den Unteransprüchen beansprucht und werden nachfolgend näher erläutert.

So ist es von Vorteil, wenn die Kunststoffhaut, etwa im Bereich des benachbarten Verschlussstückes, in direkter Anlage mit dem Kunststoffträger bringbar ist oder steht. Eine gute Dichtwirkung wird dadurch erreicht.

Als guter Innen- oder Außendurchmesser, hat sich der Wert von 10 mm bewährt. Allerdings können auch Abweichungen von 1, 2, 3, 4 oder gar 5 mm noch akzeptable Ergebnisse erzielen. Der Dichtungsschlauch selber kann auch aus vergleichbaren Materialien gefertigt sein, wie etwa Gummi oder Kautschuk. Beim Einfügen des Verschlussstückes in den Dichtungsschlauch, kann eine besonders gute Dichtwirkung erzielt werden. Alternativ, ist es natürlich auch möglich, dass das Verschlussstück zumindest abschnittsweise den Dichtungsschlauch umgibt, etwa nach Art einer Kappe.

Es ist zweckmäßig, wenn das Verschlussstück von einer Schelle unter Zwischenlage einer den Dichtungsschlauch ausformenden Wandung umgeben ist. Die Schelle kann durch Sekundärmittel einfach kontaktiert werden, insbesondere wenn sie aus einer Metalllegierung, wie einer Leichtmetall- oder Stahllegierung gefertigt ist. Hier bietet sich Blech an, das einfach montierbar und kostengünstig erzeugbar ist.

Um ein effizientes Zusammenwirken der Einzelkomponenten zu erreichen, ist es von Vorteil, wenn die Schelle von der zweiten Werkzeugteilstückseite her die Kunststoffhaut kontaktiert.

Auch ist es von Vorteil, wenn ein Druckluftanschluss durch die Wandung des Dichtungsschlauches hindurch, mit einem mit dem Inneren des Dichtungsschlauches verbundenen Leitungsabschnitt im Verschlussstück in Fluidleitbeziehung steht. Dadurch ist das Einbringen von Luft in das Innere des Dichtungsschlauches, um ein Aufblasen oder Aufblähen dessen zu erreichen, effizient und ohne große Strömungsverluste möglich.

Ein vorteilhaftes Ausführungsbeispiel ist auch dadurch gekennzeichnet, dass die Schelle mit einem Pneumatikantriebssystem verbunden ist. Die Schelle kann dann zu einer gewünschten Stelle translatorisch bewegt werden, um einerseits einen guten Dichtungsabschluss zwischen der Kunststoffhaut und dem Kunststoffträger zu erreichen, und andererseits auch ein Luftablassen, wie ein Entlüften zu bewirken. Gerade Letzteres ist für eine gute Qualität des zu erzielenden Werkstücks von besonderer Bedeutung.

Es hat sich als vorteilhaft herausgestellt, wenn das Pneumatikantriebssystem und der Druckluftanschluss von derselben Quelle von einem Medium versorgt / versorgbar sind. So kann dann bspw. Druckluft sowohl zum Aufblasen des Dichtungsschlauches eingesetzt werden, als auch zum gezielten Verfahren des Endbereiches des Schlauches, um den Kunststoffträger mit der Kunststoffhaut in Dichtbeziehung zu bringen.

Ein weiteres vorteilhaftes Ausführungsbeispiel ist auch dadurch gekennzeichnet, dass das Pneumatikantriebssystem einen (Standard-)Pneumatikzylinder beinhaltet, der mit einer (Standard-)Kolbenstange zusammenwirkend angeordnet ist, die mit der Schelle kraft- und/oder druckweitergebend verbunden ist. Auf diese Weise kann unter ausschließlicher Nutzung von einfachen Zukaufteilen, wie Standardbauteilen, ein kostengünstiges verfahrbares System generiert werden.

Ferner ist es von Vorteil, wenn die Schelle und/oder der Druckluftanschluss quer zur Längsachse des Dichtungsschlauches verfahrbar ist, da dadurch nur kurze Wege zu stellen / verfahren sind.

Es ist auch von Vorteil, wenn die Schelle, das Verschlussstück und der Druckluftanschluss so miteinander gekoppelt sind, dass eine Translationsbewegung der Schelle eine Zwangstranslationsbewegung des Druckluftanschlusses, um den vorzugsweise selben Betrag, bewirkt / hervorruft.

Auch ist es von Vorteil, wenn das (alleinige / einzige) Verschlussstück in zwei diskreten Enden eines Dichtungsschlauches oder mehrerer Dichtungsschläuche eingesetzt ist. Das Verschlussstück wirkt somit dann als so genanntes "Doppelendstück".

Die Erfindung betrifft auch ein Verfahren zum Abdichten eines Schäumwerkzeugs mit einem ersten Werkzeugteilstück, an dem ein Kunststoffträger anbringbar oder angebracht ist, und einem zweiten Werkzeugteilstück, an dem eine Kunststoffhaut anbringbar oder angebracht ist, wobei ein mit einem Verschlussstück versehener Dichtungsschlauch zwischen das erste Werkzeugteilstück und das zweite Werkzeugteilstück so eingelegt wird, dass die Kunststoffhaut auf der dem ersten Werkzeugteilstück zugewandten Seite des Dichtungsschlauches angeordnet ist. Anders als bisher, ist es aber erfindungsgemäß, wenn der Dichtungsschlauch zusammen mit dem Verschlussstück in einem Endbereich in dichtende Anlage an den Kunststoffträger verfahren wird.

Dabei ist es von Vorteil, wenn in einem Zwischenraum zwischen der Kunststoffhaut und dem Kunststoffträger PU-Schaum eingebracht wird und vorzugsweise der PU-Schaum danach austreibt. Ein Ausdehnen führt dann zu einer gewünschten Optik und Haptik.

Dabei ist es von Vorteil, wenn der Dichtungsschlauch aufgepumpt wird, so dass eine durch ihn erzwungene Durchmesservergrößerung die Kunststoffhaut in dichtende Anlage mit dem Kunststoffträger zwingt.

Eine vorteilhafte Verfahrensvariante besteht auch darin, dass (erst) eine den Dichtungsschlauch umgebende Schelle druckluftgetrieben verfahren wird und dadurch / dann ein mit dem Inneren des Dichtungsschlauches durch einen Leitungsabschnitt eines in das Ende des Dichtungsschlauches eingesetzten Verschlussstückes in Verbindung stehender Druckluftanschluss zwangsverlagert wird.

Mit anderen Worten betrifft die Erfindung einen Silikonschlauch mit 10 mm Durchmesser, der in eine vorgefertigte Dichtnut in ein Werkzeug, etwa mit zwei Hälften, bspw. einem ersten Werkzeugteilstück und einem zweiten Werkzeugteilstück, eingelegt wird. Der Schlauch liegt u.U. direkt bis zur Teilungsfläche zwischen zwei beweglichen Elementen. Am Ende des Schlauches / Dichtungsschlauches, ist ein Verschlussstück mit einem Druckluftanschluss bündig in den Schlauch eingesetzt. Von außen wird der Schlauch mit einer Schelle abgedichtet. Diese Schelle ist lose auf einem Pneumatikzylinder aufgesteckt. Im Ruhezustand liegt das System unterhalb einer Werkzeugteilungsfläche. Somit kann diese Art der Abdichtung nicht nur in horizontalen, sondern auch in vertikalen Abdichtsituationen eingesetzt werden. Mit Hilfe dieses Zylinders wird der Schlauch angehoben und drückt in Kombination mit dem aufgeblasenen Schlauch die eingelegte (Kunststoff-)Haut gegen den Kunststoffträger im geschlossenen Werkzeug und dichtet den Bereich somit komplett ab.

Auf diese Weise wird eine Kostenreduzierung in der Herstellung, eine Zeitersparnis in der Herstellung, eine Zeit- und Kostenersparnis im Verschleißfall, eine einfache Handhabung und mehr Flexibilität in der Auslegung der Konzeption erreicht.

Derartige Dichtsysteme bieten sich besonders bei Schäumwerkzeugen für PU-Anwendungen an.

Die Erfindung wird nachfolgend mit Hilfe einer Zeichnung näher erläutert. Es zeigen:
- Fig. 1: eine perspektivische Darstellung eines Teils eines erfindungsgemäßen Schäumwerkzeugs einer ersten Ausführungsform mit in Kontakt mit einem zweiten Werkzeugteilstück stehendem Dichtungsschlauch,
- Fig. 2: eine Querschnittsdarstellung durch das Schäumwerkzeug aus Fig. 1 und eingelegter Kunststoffhaut sowie benachbart angebrachtem Kunststoffträger, und
- Fig. 3: eine zur Fig. 2 vergleichbare Darstellungsweise, bei jedoch aufgeblasenem Dichtungsschlauch und an den Kunststoffträger in dessen Endbereich herangefahrener Kunststoffhaut.

Die Figuren sind lediglich schematischer Natur und dienen nur dem Verständnis der Erfindung. Die gleichen Elemente sind mit denselben Bezugszeichen versehen.

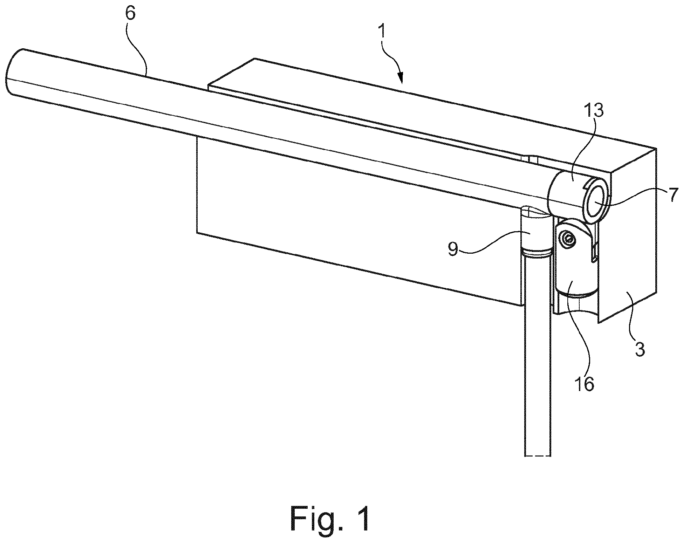

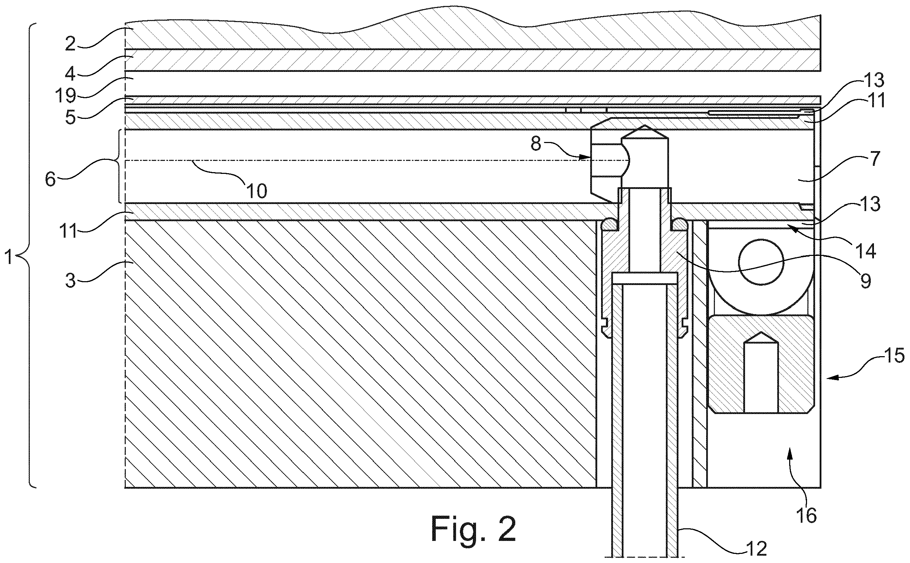

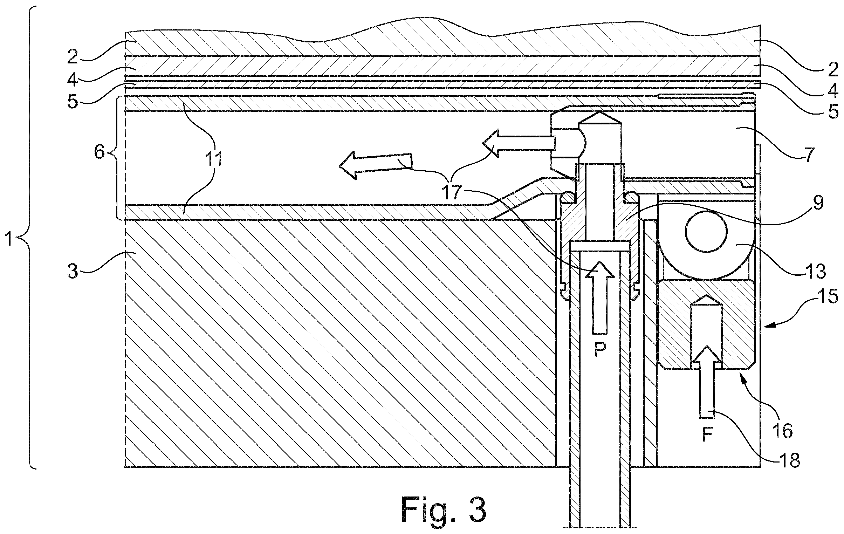

In Fig. 1 ist ein Schäumwerkzeug 1 zum Teil dargestellt. Von den zwei vorhandenen und aufeinander zu fahrbaren Werkzeugteilstücken ist zwar ein erstes Werkzeugteilstück 2 nicht dargestellt (in den Fign. 2 und 3 aber angedeutet), wobei ein zweites Werkzeugteilstück in Fig. 1 jedoch zu erkennen ist und mit dem Bezugszeichen 3 versehen ist. Zwischen dem ersten Werkzeugteilstück 2 und dem zweiten Werkzeugteilstück 3 ist auch, wie in Fig. 2 gut zu erkennen, ein Kunststoffträger 4 und eine Kunststoffhaut 5 angeordnet. Zwischen der Kunststoffhaut 5 und dem zweiten Werkzeugteilstück 3 ist ein Dichtungsschlauch / Schlauch / Dichtschlauch 6 vorhanden. An einem sonst offenen Ende des Dichtungsschlauches 6 ist ein Verschlussstück 7 vorhanden. Dieses Verschlussstück 7 ist nach Art eines Stopfens ausgebildet und hat eine ins Innere des Dichtungsschlauches 6 ragende konische Ausprägung. Das Verschlussstück 7 ist rotationssymmetrisch ausgebildet, weist jedoch einen von der Rotationssymmetrie auch abweichenden Leitungsabschnitt 8 auf.

Der Leitungsabschnitt 8 verbindet ein Inneres des Dichtungsschlauches 6 mit einem Äußeren, insbesondere unter Ankopplung eines Druckluftanschlusses 9. Der Druckluftanschluss 9 ragt von außen, quer zu einer Längsachse 10 sowohl des Dichtungsschlauches 6, als auch des Verschlussstückes 7 (im Zustand des unaufgepumpten Dichtungsschlauches 6) durch eine den Dichtungsschlauch 6 definierende Wandung 11. Der Druckluftanschluss 9 ist mit einer Luftleitung 12 verbunden. Eine Schelle 13 umgibt ein das Verschlussstück 7 aufnehmendes Ende 14 des Dichtungsschlauches 6, zumindest teilweise.

Die Schelle 13 steht mit einem Pneumatikantriebssystem 15 in Wirkbeziehung. Das Pneumatikantriebssystem 15 kann einen Pneumatikzylinderanschluss, eine Kolbenstange und einen (Standard-)Pneumatikzylinder aufweisen, die jedoch nicht alle in der Figur dargestellt sind.

Jedenfalls weist das Pneumatikantriebssystem 15 auch einen in Fig. 1 als Zylinderanschluss 16 markiertes Bauteil auf.

Zurückkommend auf Fig. 2 sei erwähnt, dass der Kunststoffträger 4 über Vakuum am ersten Werkzeugteilstück 2 befestigbar ist. Natürlich ist es auch möglich, dass das erste Werkzeugteilstück und das zweite Werkzeugteilstück 3 zueinander so angeordnet sind, dass sie eine vertikal ausgerichtete Trennebene definieren.

In Fig. 3 ist der abgedichtete Zustand in der Schäumwerkzeugkonstellation dargestellt. Es wird gleichzeitig eine Aktivierung des Pneumatikantriebssystems 15 und ein Aufblasen des Inneren des Dichtungsschlauches 6 initiiert. Natürlich ist es auch möglich, kurz vor der einen Aktion die andere zu tätigen bzw. anders herum.

In Richtung der als Luftpfeile 17 markierte Befüllungsrichtung wird Luft in das Innere des Dichtungsschlauches 6 durch die Wandung 11 des Dichtungsschlauches 6 und durch das Verschlussstück 7 gebracht, sodass eine Deformation des vorzugsweise aus Silikon ausgebildeten Dichtungsschlauches 6 erzwungen wird. Gleichzeitig oder kurz vorher oder nachher wird auch durch Aufbringen der mit dem Kraftpfeil 18 markierten Kraft eine translatorische Verlagerung der Schelle 13, und damit auch des Verschlussstückes 7 und damit auch des Endes 14 des Dichtungsschlauches 6 und damit auch des Druckluftanschlusses 9 erzwungen. Infolge dieser beiden Aktionen, nämlich des Aufblasens und Ausdehnens des Dichtungsschlauches 6 einerseits und translatorischen Verlagerns des Endes 14 des Dichtungsschlauches 6 liegt die Kunststoffhaut 5 entlang einer durchgehenden Dichtungslinie fluiddicht an dem Kunststoffträger 4 an. Ein in einem Zwischenraum 19 (siehe Fig. 2) eingebrachter PU-Schaum, kann dann nicht mehr diese Dichtungslinie überschreiten und aus dem Werkzeug austreten.

### Bezugszeichenliste

- 1: Schäumwerkzeug
- 2: erstes Werkzeugteilstück
- 3: zweites Werkzeugteilstück
- 4: Kunststoffträger
- 5: Kunststoffhaut
- 6: Dichtungsschlauch
- 7: Verschlussstück
- 8: Leitungsabschnitt
- 9: Druckluftanschluss
- 10: Längsachse
- 11: Wandung
- 12: Luftleitung
- 13: Schelle
- 14: Ende des Dichtungsschlauches
- 15: Pneumatikantriebssystem
- 16: Zylinderanschluss
- 17: Luftpfeil
- 18: Kraftpfeil
- 19: Zwischenraum

## Patentansprüche

1. Schäumwerkzeug (1) mit einem ersten Werkzeugteilstück (2), an dem ein Kunststoffträger (4) anbringbar ist, und einem davon beabstandbaren zweiten Werkzeugteilstück (3), das mit einer Kunststoffhaut (5) in Verbindung bringbar ist, mit einem Dichtungsschlauch (6), der mit dem zweiten Werkzeugteilstück (3) in dichtendem Kontakt steht und an wenigstens einem Abschnitt mit einem Verschlussstück (7) dicht verschlossen ist, **wobei** der Dichtungsschlauch (6) in eine solche Position, auf das erste Werkzeugteilstück (2) zu, verfahrbar ist, dass die Kunststoffhaut (5) mit dem Kunststoffträger (4) in dichtenden Kontakt bringbar ist, **dadurch gekennzeichnet, dass** das Verschlussstück (7) dichtend in den Dichtungsschlauch (6) eingesetzt ist und von einer Schelle (13) umgeben ist, die translatorisch bewegbar ist.

2. Schäumwerkzeug (1) nach Anspruch 1, **dadurch gekennzeichnet, dass** die Kunststoffhaut (5) in direkter Anlage mit dem Kunststoffträger (4) bringbar ist oder steht.

3. Schäumwerkzeug (1) nach Anspruch 1 oder 2, **dadurch gekennzeichnet, dass** das Verschlussstück (7) von der Schelle (13) unter Zwischenlage einer den Dichtungsschlauch (6) ausformenden Wandung (11) umgeben ist.

4. Schäumwerkzeug (1) nach einem der Ansprüche 1 bis 3, **dadurch gekennzeichnet, dass** die Schelle (13) von der zweiten Werkzeugteilstückseite her die Kunststoffhaut (5) kontaktiert.

5. Schäumwerkzeug (1) nach einem der Ansprüche 1 bis 4, **dadurch gekennzeichnet, dass** die Schelle (13) mit einem druckluftgetriebenen Antriebssystem verbindbar ist, durch das die Schelle (13) translatorisch bewegbar ist.

6. Schäumwerkzeug (1) nach einem der Ansprüche 1 bis 5, **dadurch gekennzeichnet, dass** ein Druckluftanschluss (9) durch die Wandung (11) des Dichtungsschlauches (6) hindurch, mit einem mit dem Inneren des Dichtungsschlauches (6) verbundenen Leitungsabschnitt (8) im Verschlussstück (7) in Fluidleitbeziehung steht.

7. Schäumwerkzeug (1) nach einem der Ansprüche 1 bis 6, **dadurch gekennzeichnet, dass** die Schelle (13) und/oder der Druckluftanschluss (9) quer zu einer Längsachse (10) des Dichtungsschlauches (6) angeordnet und/oder verfahrbar ist/sind.

8. Schäumwerkzeug (1) nach einem der Ansprüche 1 bis 7, **dadurch gekennzeichnet, dass** die Schelle (13) und/oder der Dichtungsschlauch (6) unterhalb einer Werkzeugteilungsfläche liegt.

9. Verfahren zum Abdichten eines Schäumwerkzeugs (1) nach einem der Ansprüche 1 bis 8, der Dichtungsschlauch (6) zwischen das erste Werkzeugteilstück (2) und das zweite Werkzeugteilstück (3) so eingelegt wird, dass die Kunststoffhaut (5) auf der dem ersten Werkzeugteilstück (2) zugewandten Seite des Dichtungsschlauchs (6) angeordnet ist, wobei der Dichtungsschlauch (6) zusammen mit dem Verschlussstück (7) in einem Endbereich in dichtende Anlage an den Kunststoffträger (4) verfahren wird.

10. Verfahren nach Anspruch 9, **dadurch gekennzeichnet, dass** in einem Zwischenraum (19) zwischen der Kunststoffhaut (5) und dem Kunststoffträger (4) PU-Schaum eingebracht wird.

11. Verfahren nach Anspruch 9 oder 10, **dadurch gekennzeichnet, dass** der Dichtungsschlauch (6) aufgepumpt wird, sodass eine bei ihm erzwungene Durchmesservergrößerung die Kunststoffhaut (5) in dichtende Anlage mit dem Kunststoffträger (4) zwingt.

12. Verfahren nach einem der Ansprüche 9 bis 11, **dadurch gekennzeichnet, dass** die den Dichtungsschlauch (6) umgebende Schelle (13) druckluftgetrieben verfahren wird und dadurch ein mit dem Inneren des Dichtungsschlauches (6) durch einen Leitungsabschnitt (8) eines in das Ende (14) des Dichtungsschlauches (6) eingesetzten Verschlussstückes (7) in Verbindung stehender Druckluftanschluss (9) zwangsverlagert wird.

13. Verfahren nach Anspruch 12, **dadurch gekennzeichnet, dass** die Schelle (13) und/oder der Druckluftanschluss (9) quer zu einer Längsachse (10) des Dichtungsschlauches (6) verfahren wird/werden.

## Claims

1. A foaming mould (1) having a first mould section (2) on which a plastic carrier (4) is able to be mounted, and with a second mould section (3), able to be spaced apart therefrom, which is able to be brought in connection with a plastic skin (5), with a sealing tube (6) which is in sealing contact with the second mould section (3), and is tightly closed on at least one portion with a closure piece (7), **wherein** the sealing tube (6) is movable into such a position towards the first mould section (2), that the plastic skin (5) is able to be brought into sealing contact with the plastic carrier (4), **characterized in that** the closure piece (7) is inserted in a sealing manner into the sealing tube (6) and is surrounded by a clamp (13), which is movable in a translatory manner.

2. The foaming mould (1) according to Claim 1, **characterized in that** the plastic skin (5) is able to be brought, or is, in direct abutment with the plastic carrier (4).

3. The foaming mould (1) according to Claim 1 or 2, **characterized in that** the closure piece (7) is surrounded by the clamp (13) with interposition of a wall (11) shaping the sealing tube (6).

4. The foaming mould (1) according to one of Claims 1 to 3, **characterized in that** the clamp (13) contacts the plastic skin (5) from the direction of the second mould section side.

5. The foaming mould (1) according to one of Claims 1 to 4, **characterized in that** the clamp (13) is able to be connected with a compressed air-driven drive system, by which the clamp (13) is movable in a translatory manner.

6. The foaming mould (1) according to one of Claims 1 to 5, **characterized in that** a compressed air connection (9) is in fluid-conducting relationship, through the wall (11) of the sealing tube (6), with a duct section (8), connected with the interior of the sealing tube (6), in the closure piece (7).

7. The foaming mould (1) according to one of Claims 1 to 6, **characterized in that** the clamp (13) and/or the compressed air connection (9) is/are arranged and/or movable transversely to a longitudinal axis (10) of the sealing tube (6).

8. The foaming mould (1) according to one of Claims 1 to 7, **characterized in that** the clamp (13) and/or the sealing tube (6) lies beneath a mould jointing plane.

9. A method for sealing a foaming mould (1) according to one of Claims 1 to 8, wherein the sealing tube (6) is inserted between the first mould section (2) and the second mould section (3) so that the plastic skin (5) is arranged on the side of the sealing tube (6) facing the first mould section (2), wherein the sealing tube (6) together with the closure piece (7) in an end region is moved into sealing abutment against the plastic carrier (4).

10. The method according to Claim 9, **characterized in that** in an intermediate space (19) between the plastic skin (5) and the plastic carrier (4) PU foam is introduced.

11. The method according to Claim 9 or 10, **characterized in that** the sealing tube (6) is inflated so that an increased diameter which is imposed on it compels the plastic skin (5) into sealing abutment with the plastic carrier (4).

12. The method according to one of Claims 9 to 11, **characterized in that** the clamp (13), surrounding the sealing tube (6), is moved in a compressed air-driven manner, and thereby a compressed air connection (9) is relocated which is in connection with the interior of the sealing tube (6) through a duct section (8) of a closure piece (7) inserted into the end (14) of the sealing tube (6).

13. The method according to Claim 12, **characterized in that** the clamp (13) and/or the compressed air connection (9) is/are moved transversely to a longitudinal axis (10) of the sealing tube (6).

## Revendications

1. Moule à mousse (1) comprenant une première partie de moule (2) sur laquelle un support en plastique (4) peut être placé, et une seconde partie de moule (3) distante de celle-ci qui peut être reliée à une pellicule de plastique (5), comprenant un flexible d'étanchéité (6) qui est en contact d'étanchéité avec la seconde partie de moule (3) et est raccordé de façon étanche sur au moins un tronçon avec un élément de fermeture (7), dans lequel le flexible d'étanchéité (6) est déplaçable dans une telle position en direction de la première partie de moule (2) que la pellicule de plastique (5) peut être amenée en contact d'étanchéité avec le support en plastique (4), **caractérisé en ce que** l'élément de fermeture (7) est placé en étanchéité dans le flexible d'étanchéité (6) et est entouré d'une bride (13) qui est mobile en translation.

2. Moule à mousse (1) selon la revendication 1, **caractérisé en ce que** la pellicule de plastique (5) peut être amenée ou est en appui direct avec le support en plastique (4).

3. Moule à mousse (1) selon la revendication 1 ou 2, **caractérisé en ce que** l'élément de fermeture (7) est entouré par la bride (13) par l'intermédiaire d'une paroi (11) formant le flexible d'étanchéité (6).

4. Moule à mousse (1) selon l'une des revendications 1 à 3, **caractérisé en ce que** la bride (13) contacte la pellicule de plastique (5) depuis le côté de la seconde partie de moule.

5. Moule à mousse (1) selon l'une des revendications 1 à 4, **caractérisé en ce que** la bride (13) peut être reliée à un système d'entraînement entraîné par air comprimé par lequel la bride (13) est mobile en translation.

6. Moule à mousse (1) selon l'une des revendications 1 à 5, **caractérisé en ce qu'**un raccordement d'air comprimé (9) à travers la paroi (11) du flexible d'étanchéité (6) est en relation de conduction de fluide avec un tronçon de conduite (8) relié avec l'intérieur du flexible d'étanchéité (6), dans l'élément de fermeture (7) .

7. Moule à mousse (1) selon l'une des revendications 1 à 6, **caractérisé en ce que** la bride (13) et/ou le raccordement d'air comprimé (9) est/sont disposé(s) et/ou déplaçable(s) transversalement à un axe longitudinal (10) du flexible d'étanchéité (6).

8. Moule à mousse (1) selon l'une des revendications 1 à 7, **caractérisé en ce que** la bride (13) et/ou le flexible d'étanchéité (6) repose en-dessous d'une surface de partage de moule.

9. Procédé pour étanchéifier un moule à mousse (1) selon l'une des revendications 1 à 8, dans lequel le flexible d'étanchéité (6) est ainsi inséré entre la première partie de moule (2) et la seconde partie de moule (3) que la pellicule de plastique (5) est disposée sur le côté du flexible d'étanchéité (6) tourné vers la première partie de moule (2), dans lequel le flexible d'étanchéité (6) est déplacé conjointement avec l'élément de fermeture (7) en appui d'étanchéité sur le support en plastique (4) dans une partie d'extrémité.

10. Procédé selon la revendication 9, **caractérisé en ce que** de la mousse PU est insérée dans un espace intermédiaire (19) entre la pellicule de plastique (5) et le support en plastique (4).

11. Procédé selon la revendication 9 ou 10, **caractérisé en ce que** le flexible d'étanchéité (6) est pompé, de sorte qu'un agrandissement de diamètre forcé sur celui-ci force la pellicule de plastique (5) en appui d'étanchéité avec le support en plastique (4).

12. Procédé selon l'une des revendications 9 à 11, **caractérisé en ce que** la bride (13) entourant le flexible d'étanchéité (6) est déplacée en étant entraînée par air comprimé (9) et **en ce qu'**un raccordement d'air comprimé en liaison avec l'intérieur du flexible d'étanchéité (6) par un tronçon de conduite (8) d'un élément de fermeture (7) inséré dans l'extrémité (14) du flexible d'étanchéité (6), est déplacé de manière forcée.

13. Procédé selon la revendication 12, **caractérisé en ce que** la bride (13) et/ou le raccordement d'air comprimé (9) est/sont déplacé(s) transversalement à un axe longitudinal (10) du flexible d'étanchéité (6).
